# EUROPÄISCHE PATENTSCHRIFT

(11) **EP 0 963 309 B1**
(45) Veröffentlichungstag und Bekanntmachung des Hinweises auf die Patenterteilung: **25.09.2002**
(21) Anmeldenummer: 98912322.9
(22) Anmeldetag: 18.02.1998
(51) Int. Cl.: B60R 19/26

(54) **BEFESTIGUNGSSYSTEM FÜR FORMINTEGRIERTE STOSSFÄNGER**
SECURING SYSTEM FOR INTEGRALLY SHAPED BUMPER
SYSTEME DE FIXATION POUR PARE-CHOCS DE FORME INTEGREE

(30) Priorität: 28.02.1997 DE 19708118
(43) Veröffentlichungstag der Anmeldung: 15.12.1999
(73) Patentinhaber: DYNAMIT NOBEL KUNSTSTOFF GmbH, 53840 Troisdorf (DE)
(72) Erfinder: KUREK, Gerhard, D-91781 Weissenburg (DE); PREISSLER, Dietmar, D-91781 Hagenbuch (DE)
(74) Vertreter: Scherzberg, Andreas, Dr.
(86) Internationale Anmeldenummer: EP9800914
(87) Internationale Veröffentlichungsnummer: WO98038066

(56) Entgegenhaltungen:
- DE-U- 29 720 874
- FR-A- 2 198 433
- FR-A- 2 634 703
- PATENT ABSTRACTS OF JAPAN vol. 007, no. 187 (M-236), 16.August 1983 & JP 58 089437 A (NISSAN JIDOSHA KK ET AL.), 27.Mai 1983,

## Beschreibung

Die Erfindung betrifft ein Befestigungssystem für formintegrierte Stoßfänger.

Neuere Stoßfänger bestehen aus einem quer zum Kraftfahrzeug angeordneten Hauptteil mit in angenäherter Längsrichtung des Fahrzeugs sich erstreckenden Seitenteilen. Der Stoßfänger kann einteilig oder mehrteilig ausgeführt sein und ist punktuell am Fahrzeug befestigt. Das Hauptteil ist mit einem Träger des Fahrzeugs verbunden und die Seitenteile vorzugsweise mit dem Kotflügel.

Die derzeitigen Stoßfängersysteme werden immer mehr Bestandteil der Karosserie. Nach wie vor müssen sie aber die Funktion eines Stoßfängers erfüllen. Ziel dabei ist, daß die Karosserie bei kleinen Crashs ohne Schaden bleiben soll. Die neuen Stoßfängersysteme sind direkt in das Chassis integriert, d. h. es gibt dazu keinen seitlichen Überstand mehr. Bei einer festen Verbindung würde das bedeuten, dass die Blechkarosserie bleibend verformt wird. Folglich entstehen erhebliche Reparaturkosten.

Eine Stossfänger gemäss dem Oberbegtiff des Anspruchs 1 ist aus FR-A-2 634 703 bekannt.

Der Erfindung liegt die Aufgabe zugrunde, einen vorderen oder hinteren Stoßfänger so weiterzubilden, dass bei einem Unfall die Seitenteile des Stoßfängers die Blechkarosserie bzw. die Kotflügel nicht bleibend verformen und in der Schließstellung die Seitenteile auf einfache Art befestigt sind, wobei die Befestigung bei einem Unfall leicht lösbar ist.

Erfindungsgemäß wird diese Aufgabe durch die Merkmale des Anspruchs 1 gelöst.

Bei einer Verschraubung der Seitenteile am Fahrzeug, bzw. am Kotflügel, ist die Verschraubung vorteilhafterweise auf einer Schräge angeordnet und ist unter Krafteinwirkung in die Offenstellung verschiebbar. Mit Offenstellung ist hier die Stellung gemeint, bei der die Seitenteile nicht mehr im Chassis integriert sind, sondern nach außen abstehen. Hierdurch können sie bei einem Unfall das Chassis nicht verformen. Die Schräge gibt dabei die Bewegungsrichtung an.

Erfindungsgemäß weist die Befestigungsschraube, mit der die Seitenteile am Chassis bzw. Kotflügel befestigt sind, eine an ihrem Kopf angeordnete Gleitplatte auf, die auf der Schräge verschiebbar ist. Die Gleitplatte ist dabei in einer Art Nut auf der Schräge geführt.

Sinnvollerweise ist die Schräge im Stoßfänger angeordnet. Die Schraube mit der Gleitplatte durchragt daher das Chassis bzw. den Kotflügel und ist mit einer Mutter festgelegt.

Weitere Merkmale ergeben sich aus den Figuren, die nachfolgend beschrieben sind. Es zeigt:
- Fig. 1: im Schnitt die erfindungsgemäße Befestigung eines Stoßfängers an einem Kotflügel und
- Fig. 2: einen Schnitt nach der Linie J - J von Fig. 1.

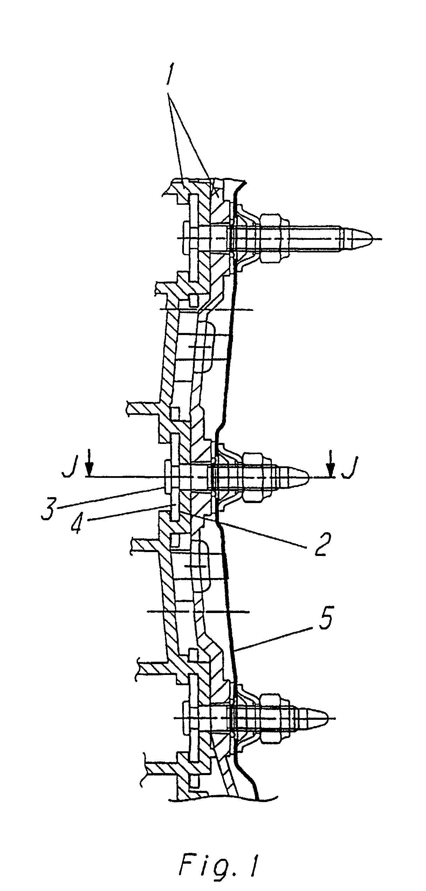

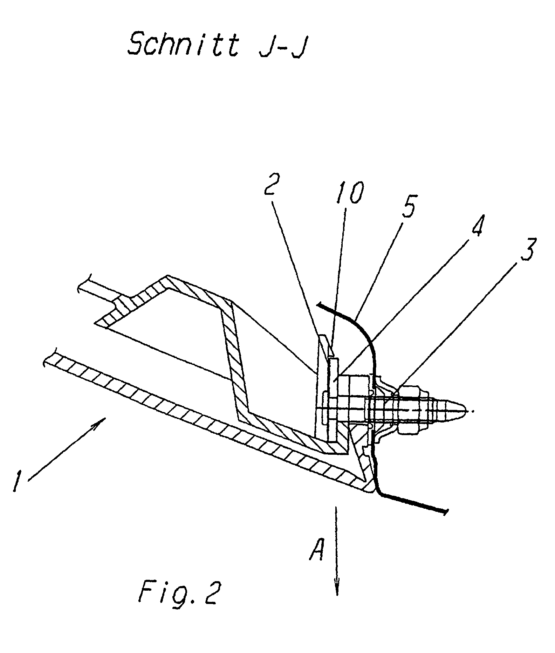

Fig. 1 zeigt im Schnitt die erfindungsgemäße Befestigung eines Stoßfängers 1 an einem Kotflügel 5. Der Stoßfänger 1 besteht aus einem quer zum Fahrzeug angeordneten Hauptteil mit Seitenteilen, die sich links und rechts in angenäherter Längsrichtung des Fahrzeugs erstrecken. Gezeigt ist das Ende eines Seitenteils, welches über eine Verschraubung am Kotflügel 5 befestigt ist. Fig. 2 zeigt einen Schnitt nach der Linie J - J von Fig. 1.

Das Ende der Seitenteile besteht aus einem Schließteil und einem Überzug. Der Überzug ist das von außen sichtbare Teil. Im Schließteil ist eine Schräge 2 angeordnet, auf der der Kopf einer Befestigungsschraube 3 aufliegt. Der Kopf ist als Gleitplatte 4 ausgebildet und auf der Schräge 2 in einer Führung geführt. Die Befestigungsschraube 3 durchragt den Kotflügel 5 und ist über eine Mutter und einen Abstandshalter festgelegt. In der Schließstellung (siehe Fig. 1 und 2) ist die Gleitplatte 4 auf der Schräge 2 bzw. in der zugehörigen Führung über einen Clip 10 gehalten. Bei einem Unfall schiebt sich das Schließteil 6 mit der Schräge 2 über die Gleitplatte 4 in die Offenstellung. Diese Bewegungsrichtung ist in der Fig. 2 mit dem Pfeil A gekennzeichnet. Der Clip 10 wird dabei weggeschoben oder abgebrochen. Alle Teile des Stoßfängers 1 bestehen aus Kunststoff. Lediglich die Befestigungsschraube 3 mit der Gleitplatte 4 ist aus Metall hergestellt.

Nach einem Unfall kann durch Lockern der Befestigung der Stoßfänger wieder in seine ursprüngliche Lage gebracht werden.

## Patentansprüche

1. Vorderer oder hinterer Stoßfänger (1) eines Kraftfahrzeugs mit einem quer zum Fahrzeug angeordneten Hauptteil mit in angenäherter Längsrichtung des Fahrzeugs sich erstreckenden Seitenteilen, wobei der Stoßfänger (1) punktuell am Fahrzeug befestigt ist, die Befestigung der Seitenteile auf einer Schräge (2) angeordnet ist und die Seitenteile von einer Schließstellung, bei der die Seitenteile am Kraftfahrzeug anliegen, in eine Offenstellung, bei der die Seitenteile vom Fahrzeug abstehen, verschiebbar sind, **dadurch gekennzeichnet**,
- dass die Seitenteile in der Schließstellung auf einer Befestigungsschraube (3) angeordnet sind, die am Chassis bzw. Kotflügel festliegt,
- dass die Befestigungsschraube (3) eine an ihrem Kopf angeordnete Gleitplatte (4) aufweist, auf der die Seitenteile von der Schließstellung in die Offenstellung gleitend verschiebbar angeordnet sind,
- dass in der Offenstellung die Seitenteile mit Abstand von der Befestigungsschraube (3) angeordnet sind, und
- dass die Gleitplatte (4) auf der Schräge (2) bzw. in der zugehörigen Führung über einen Clip (10) gehalten ist, der bei einem Unfall weggeschoben oder abgebrochen wird.

## Claims

1. Front or rear bumper (1) of a motor vehicle having a main portion which is arranged transversely with respect to the vehicle and has side portions which extend approximately in the longitudinal direction of the vehicle, with the bumper (1) being secured at points on the vehicle, the means of securement of the side portions being arranged on an incline (2) and with it being possible to displace the side portions from a closed position, in which the side portions rest against the motor vehicle, into an open position in which the side portions stand off from the vehicle, **characterised in that**, in the closed position, the side portions are arranged on a securing screw (3) which is fixed on the chassis or mudguard, **in that** the securing screw (3) has a sliding plate (4) arranged on its head, on which plate the side portions are arranged in such a way that they can be displaced so as to slide from the closed position into the open position, **in that** in the open position the side portions are arranged at a distance from the securing screw (3), and **in that** the sliding plate (4) is held on the incline (2) or in the associated guide by way of a clip (10) which in the event of an accident, is pushed away or broken off.

## Revendications

1. Pare-chocs avant ou arrière (1) pour véhicule automobile, comportant un élément principal disposé transversalement au véhicule, et des éléments latéraux qui s'étendent sensiblement dans la direction longitudinale du véhicule, le pare-chocs (1) étant fixé par points au véhicule, la fixation des éléments latéraux étant située sur une rampe (2) et les éléments latéraux pouvant être déplacés d'une position fermée, dans laquelle lesdits éléments latéraux sont disposés contre le véhicule, dans une position ouverte, dans laquelle les éléments latéraux sont écartés du véhicule, **caractérisé**
**en ce que** les éléments latéraux, dans la position fermée, sont disposés sur une vis de fixation (3) qui est fixée au châssis ou à l'aile,
**en ce que** la vis de fixation (3) présente au niveau de sa tête une plaque de glissement (4) sur laquelle les éléments latéraux sont montés avec possibilité de coulissement de la position fermée vers la position ouverte ;
**en ce que** dans la position ouverte les éléments latéraux sont écartés de la vis de fixation (3) et
**en ce que** la plaque de glissement (4) est tenue sur la rampe (2) ou dans la glissière correspondante par un clip (10), qui est chassé ou se rompt en cas d'accident.
